# EUROPÄISCHE PATENTSCHRIFT

(11) **EP 3 727 973 B1**
(45) Veröffentlichungstag und Bekanntmachung des Hinweises auf die Patenterteilung: **10.01.2024**
(21) Anmeldenummer: 18821690.7
(22) Anmeldetag: 08.11.2018
(51) Int. Cl.: B60W 30/09, B60W 30/16, G08G 1/16

(54) **VERFAHREN UND SYSTEM ZUM VERMEIDEN VON LATERALEN KOLLISIONEN**
METHOD AND SYSTEM FOR AVOIDING LATERAL COLLISIONS
PROCÉDÉ ET SYSTÈME PERMETTANT D'ÉVITER DES COLLISIONS LATÉRALES

(30) Priorität: 21.12.2017 DE 102017223486
(43) Veröffentlichungstag der Anmeldung: 28.10.2020
(73) Patentinhaber: Continental Autonomous Mobility Germany GmbH, 85057 Ingolstadt (DE)
(72) Erfinder: BERGHÖFER, Yannick, 60322 Frankfurt a. M. (DE); BOUGHALEB HASSANI, Ahmed, 64287 Darmstadt (DE)
(74) Vertreter: Continental Corporation
(86) Internationale Anmeldenummer: PCT/DE2018/200101
(87) Internationale Veröffentlichungsnummer: WO 2019/120389

(56) Entgegenhaltungen:
- WO-A1-2017/065158
- WO-A1-2017/065212
- DE-A1-102013 010 983
- DE-A1-102016 202 830
- DE-T5-112014 007 205

## Beschreibung

Die Erfindung betrifft ein Verfahren zum Vermeiden einer lateralen Kollision eines Egofahrzeugs sowie ein System zur Durchführung des Verfahrens.

Aus dem Stand der Technik sind beispielsweise Verfahren bekannt, welche den direkten seitlichen und rückwärtigen Raum überwachen und gegebenenfalls eine Warnung ausgeben. Derartige Verfahren werden allgemein auch als AoLC-Funktionen (Avoidance of Lateral Collision) bezeichnet.

So zeigt beispielsweise die WO2014/095104A1 ein Verfahren, welches mittels Radar einen rückwärtigen sowie einen Bereich neben dem Fahrzeug überwacht. Dabei wird ein Warnsignal an den Fahrer ausgegeben, wenn ein Fahrzeug in den rückwärtigen Bereich bzw. Warnbereich eintritt. Der zweite Bereich, welche direkt neben dem Fahrzeug angeordnet ist, dient dazu, den Fahrverlauf des detektierten Fahrzeugs zu überwachen. Das Warnsignal wird solange aufrechterhalten, bis das detektierte Fahrzeug den Bereich neben dem Fahrzeug verlässt. Aus der DE102006010275A1 ist weiter ein Verfahren bekannt, welches einen Seitenrückraum überwacht.

Aus der Druckschrift DE102013010983A1 ist ein Verfahren zum Betreiben eines Kraftwagens bei einem Spurwechsel auf einer zumindest drei Fahrspuren umfassenden Richtungsfahrbahn bekannt. Es erfolgt das Erfassen eines bevorstehenden Spurwechsels des Kraftwagens von einer ersten Fahrspur auf eine benachbarte zweite Fahrspur mittels eines Überwachungssystems des Kraftwagens sowie eines bevorstehenden Spurwechsels eines anderen Fahrzeugs von einer benachbart zur zweiten Fahrspur verlaufenden dritten Fahrspur auf die zweite Fahrspur und das Ermitteln mittels des Überwachungssystems, ob bei einer Durchführung des Spurwechsels mit dem Kraftwagen eine Kollision mit dem anderen Fahrzeug droht. Es erfolgt die Ausgabe eines Warnsignals mittels einer Warneinrichtung und/oder Beeinflussen der Querführung des Kraftwagens mittels eines Fahrerassistenzsystems des Kraftwagens, sobald eine drohende Kollision ermittelt worden ist.

Die Druckschrift WO2017065158A1 betrifft eine Fahrzeugsteuerungsvorrichtung zur Detektion eines Zielobjekts vor dem Ego-Fahrzeug, welches sich in derselben Fahrtrichtung befindet. Das System ist ausgebildet, im Falle einer detektierten Kollisionsgefahr eine Maßnahme zur Vermeidung der Kollision bzw. zur Reduzierung der Kollisionsfolgen einzuleiten. Die Fahrzeugsteuerungsvorrichtung umfasst einen Zeiteinsteller, der einen Aktivierungszeitpunkt einstellt, der anzeigt, ob die Sicherheitsvorrichtung basierend auf einem Vergleich zwischen dem Aktivierungszeitpunkt und einer Zeit bis zur Kollision zu aktivieren ist, und einen Bestimmungszoneneinsteller, der Bestimmungszonen einstellt, die sich diagonal vor dem eigenen Fahrzeug in der Fahrtrichtung befinden und in der seitlichen Richtung getrennt sind. Die Vorrichtung enthält einen Korrektor, der auf der Grundlage einer Zone-zu-Zone-Bewegungshistorie des erkannten Zielobjekts zwischen den Bestimmungszonen eine Korrekturaufgabe ausführt, die mindestens eine von einer ersten Änderungsaufgabe zum Ändern der Breite eines Aktivierungsbereichs und einer zweiten Änderungsaufgabe zum Ändern des Aktivierungszeitpunkts umfasst. Die Vorrichtung enthält einen Aktivierungsbestimmer, der eine Sicherheitsvorrichtung aktiviert, wenn festgestellt wird, dass eine Position des erkannten Zielobjekts innerhalb des Aktivierungsbereichs liegt und dass die Zeit bis zur Kollision kleiner ist als der Aktivierungszeitpunkt.

Nachteilig bei dem bisherigen Stand der Technik ist, dass nicht korrekt erkannte Objektattribute des Zielfahrzeugs, wie beispielsweise laterale oder longitudinale Geschwindigkeit des Zielfahrzeugs, zu Fehleingriffen führen können. Dadurch werden die Qualität und die Reife derartiger Verfahren reduziert.

Es ist daher eine Aufgabe der vorliegenden Erfindung anhand geeigneter Maßnahmen die Kollisionsüberwachung robust auszulegen um eine AoLC-Funktion mit höchstmöglicher Reife zu erhalten.

Diese Aufgabe wird durch die Gegenstände der unabhängigen Ansprüche 1 und 8 gelöst.

Erste Überlegungen waren dahingehend, dass neben der Unterteilung des überwachten Bereichs ein zeitlicher Aspekt bezüglich der Detektion eines Zielfahrzeugs berücksichtigt werden muss, wenn das Ego-Fahrzeug direkt gesteuert werden soll. Denn sowohl ein zu frühes als auch ein zu spätes Auslösen einer Steuerung des Ego-Fahrzeugs stellen ein großes Risiko dar. Weiterhin sollten sich die unterteilten Bereiche zumindest teilweise in Ihrer Wertigkeit unterscheiden. Für eine einfache Ausgabe einer Warnmeldung, wie auch im Stand der Technik beschrieben, ist der zeitliche Aspekt nicht in dem Ausmaß relevant, da der Fahrer aufgrund der Information selbst entscheidet, ob ein Eingreifen notwendig ist und auch selbst, nachdem er auf eine potentielle Gefahr aufmerksam gemacht wurde, diese weiter beobachtet. Weiterhin wurde im Hinblick auf den zu überwachenden Bereich festgestellt, dass es notwendig sein kann, nicht nur die direkte Nebenfahrspur sondern auch die an die Nebenfahrspur angrenzende Fahrspur zu überwachen.

Dementsprechend wird erfindungsgemäß ein Verfahren zum Vermeiden einer lateralen Kollision eines Egofahrzeugs vorgeschlagen. Hierbei wird ein lateraler Bereich des Ego-Fahrzeugs überwacht, wobei der überwachte Bereich in zumindest zwei Teilbereiche unterteilt ist und die Teilbereiche mindestens ein Vorwarnbereich und ein Triggerbereich sind. Wenn in dem Vorwarn- und Triggerbereich ein Zielfahrzeug erkannt wird, werden anschließend Bewegungsparameter des Ego-Fahrzeugs und des Zielfahrzeugs ermittelt. Daraufhin kann das Ego-Fahrzeug derart gesteuert werden, dass der Abstand zum Zielfahrzeug erhöht wird. Das Egofahrzeug wird dabei in Abhängigkeit einer Verweildauer des Zielfahrzeugs im Vorwarnbereich sowie im Triggerbereich gesteuert, wobei die überwachten Teilbereiche auf der zu der von dem Ego-Fahrzeug befahrenen Fahrspur benachbarten Fahrspur und/oder einer an die benachbarte Fahrspur angrenzenden Fahrspur verortet werden.

Der Triggerbereich bezeichnet einen eng gefassten geometrischen Bereich, in dem sich das Zielfahrzeug befinden muss, damit das relative Verhältnis zwischen Ego-Fahrzeug und Zielfahrzeug einen lateralen Regeleingriff auslösen darf. Der Triggerbereich darf sich geometrisch mit dem Vorwarnbereich überschneiden. Weiter ist relevant, welche minimale Zeit sich das Zielfahrzeug in dem Triggerbereich befunden hat.

Der Vorwarnbereich ist im Gegensatz zu dem Triggerbereich ein weiter gefasster geometrischer Bereich, in dem sich das Zielfahrzeug vor Eintritt in den Triggerbereich befunden haben muss, damit das Zielfahrzeug im Triggerbereich als relevantes Objekt betrachtet werden darf. Der Vorwarnbereich stellt sicher, dass das Zielfahrzeug nicht plötzlich im Triggerbereich aufgetaucht ist, was beispielsweise durch falsche Sensordaten passieren könnte.

Vorteilhaft bei dem erfindungsgemäßen Verfahren ist, dass der überwachte Bereich in zumindest zwei unterschiedliche Bereiche aufgeteilt ist und sich ein Zielfahrzeug zumindest für eine gewisse Zeit in jedem der Bereiche aufgehalten haben muss, um einen Regeleingriff auszulösen. Weiterhin wird erst ein Regeleingriff ausgelöst, wenn sich das Zielfahrzeug in dem Triggerbereich befindet. Auf diese Weise wird verhindert, dass ein Regeleingriff zu früh ausgelöst wird. Der Begriff Regeleingriff beschreibt in diesem Zusammenhang die Steuerung des Ego-Fahrzeugs.

In einer bevorzugten Ausführungsform sind die Teilbereiche im Hinblick auf ihre räumliche Lokalisierung jeweils konstant und/oder werden jeweils adaptiv angepasst.

In einer weiteren Ausführung wird eine adaptive Anpassung der Teilbereiche aufgrund der Egofahrzeuggeschwindigkeit, einer lateralen Ego-Fahrzeuggeschwindigkeit, einer Fahrspurbreite, einer Fahrspurbreite einer benachbarten Fahrspur oder eines Abstands des Ego-Fahrzeugs zu der Fahrspurmarkierung vorgenommen. Eine adaptive Anpassung der Teilbereiche ist dahingehend vorteilhaft, da beispielsweise bei einer Verbreiterung der Fahrspur bei konstanten Teilbereichen ein Zielfahrzeug gegebenenfalls zu spät erfasst werden würde.

Weiter ist bevorzugt, dass die Teilbereiche auf der an die benachbarte Fahrspur angrenzende Fahrspur verortet werden, wenn die benachbarten Fahrspur frei ist und eine Spurwechselabsicht des Ego-Fahrzeugs festgestellt wird. Sollte bereits ein Fahrzeug auf der benachbarten Fahrspur erkannt werden, ist ein Spurwechsel nicht möglich, so dass der Spurwechselvorgang beispielsweise abgebrochen werden würde. Sollte kein Fahrzeug auf der benachbarten Fahrspur erkannt werden, so ist ein Spurwechsel möglich. Dies erfordert allerdings, bei einer mindestens dreispurigen Straße, die Überwachung einer weiteren Fahrspur, wenn von der äußersten rechten Spur auf die mittlere Spur gewechselt werden soll, da ansonsten ein Fahrzeug übersehen werden könnte, welches ebenfalls einen Spurwechsel von der äußersten linken auf die mittlere Spur durchführen will.

Deshalb wird bevorzugt bei Erkennen eines Fahrzeugs in dem Vorwarn- und/oder dem Triggerbereich auf der an die benachbarte Fahrspur angrenzenden Fahrspur eine Spurwechselabsicht des Zielfahrzeugs detektiert. Falls ein Fahrzeug auf der an die benachbarte Fahrspur angrenzenden Fahrspur erkannt wird, ist es notwendig zu ermitteln, ob das Fahrzeug beabsichtig auf dieselbe Spur zu wechseln wie das Ego-Fahrzeug. Wird eine Spurwechselabsicht des Zielfahrzeugs festgestellt, so kann der Spurwechselvorgang des Ego-Fahrzeugs abgebrochen werden, um eine Kollision zu vermeiden. Es wäre ebenfalls möglich, das Ego-Fahrzeug zu beschleunigen, sofern das erlaubte Tempolimit dabei nicht überschritten wird, und den Spurwechsel durchzuführen, so dass sichergestellt ist, dass das Ego-Fahrzeug bei einem gleichzeitigen Spurwechsel genügend Abstand zu dem Zielfahrzeug aufweist. Um die Spurwechselabsicht des Zielfahrzeugs festzustellen kann die laterale Beschleunigung des Zielfahrzeugs ermittelt werden.

Bevorzugt umfassen die Bewegungsparameter eine Fahrzeuggeschwindigkeit und/oder eine Fahrzeugbeschleunigung.

In einer besonders bevorzugten Ausführung umfasst die Steuerung des Ego-Fahrzeugs eine Beschleunigung, einen Bremsvorgang und/oder einen Lenkeingriff. Je nach Situation wird in vorteilhafter Weise das Fahrzeug entsprechend gesteuert, um die Distanz zu dem Zielfahrzeug zu erhöhen, um somit eine Kollision zu vermeiden.

Erfindungsgemäß wird weiterhin ein System zum Durchführen des erfindungsgemäßen Verfahrens vorgeschlagen, wobei das System eine Erfassungseinrichtung zum Erfassen und Bereitstellen von Daten des Überwachungsbereichs, eine Steuereinrichtung zum Steuern des Fahrzeugs sowie eine Datenverarbeitungseinrichtung zum Auswerten der Daten aufweist.

Bevorzugt umfasst die Erfassungseinrichtung zumindest eine Kamera und/oder zumindest einen Radarsensor. Mittels eines Radarsensors kann vorteilhaft ein Zielfahrzeug in dem Umfeld des Fahrzeugs detektiert werden. Mittels einer Kamera kann sowohl ein Zielfahrzeug als auch beispielsweise mittels Erkennen eines aktiven Fahrtrichtungsanzeigers eine Spurwechselabsicht detektiert werden.

Besonders bevorzugt beinhaltet die Datenverarbeitungseinrichtung einen Algorithmus, mittels welchem die Daten der Erfassungseinrichtung auswertbar sind. Der Algorithmus entscheidet aufgrund von erfüllten oder nicht erfüllten Bedingungen, ob ein Regeleingriff, also eine Steuerung des Ego-Fahrzeugs notwendig ist. Die Bedingungen, die für eine Steuerung erfüllt sein müssen umfassen untere anderem, dass sich das Zielfahrzeug in dem Vorwarnbereich und in dem Triggerbereich für eine gewisse minimale Zeit befunden haben muss. Weiterhin müssen gewisse Bedingungen des Ego-Fahrzeugs erfüllt sein. Zum Beispiel muss die Geschwindigkeit oder die Beschleunigung des Ego-Fahrzeugs einen bestimmten Wert aufweisen. Bei einem geplanten Spurwechsel des Ego-Fahrzeugs muss weiterhin der Spurwechsel des Ego-Fahrzeugs sowie des Zielfahrzeugs als Bedingung erfüllt sein. Sind alle notwendigen Bedingungen erfüllt, gibt die Datenverarbeitungseinrichtung einen Befehl an die Steuereinrichtung einen Regeleingriff auszulösen.

Weitere vorteilhafte Ausgestaltungen und Ausführungsformen der Erfindung ergeben sich aus den Figuren.

Darin zeigen:
Figur 1: eine schematische Darstellung eines Fahrzeugs mit einem Überwachungsbereich;
Figur 2: ein schematisches Ablaufdiagramm eines Algorithmus zur Datenauswertung;
Figur 3: eine schematische Darstellung eines Fahrzeugs und eines Zielfahrzeugs mit Spurwechselabsicht;
Figur 4: ein weiteres schematisches Ablaufdiagramm eines Algorithmus zur Datenauswertung;

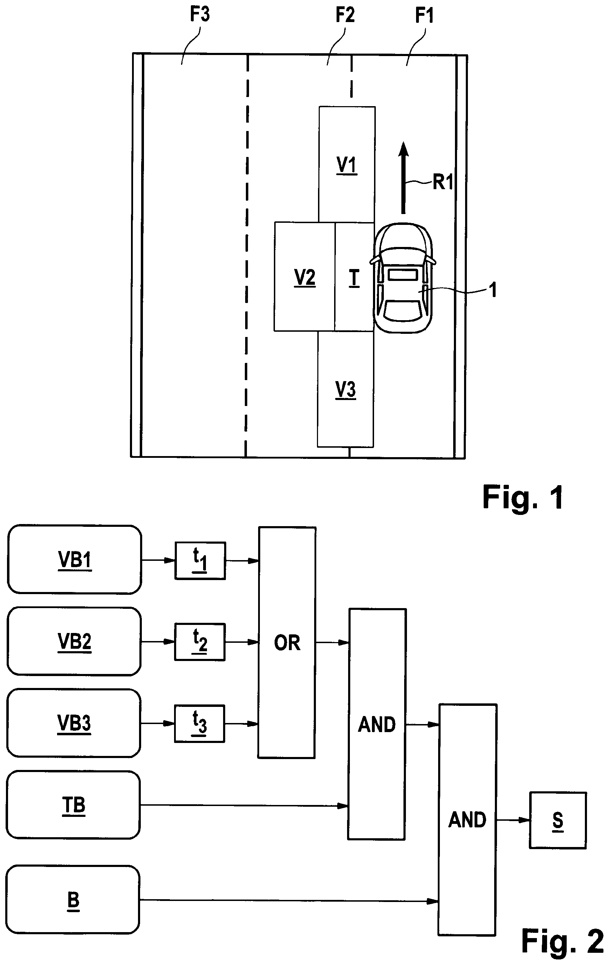

Figur 1 zeigt eine schematische Darstellung eines Fahrzeugs 1 mit einem Überwachungsbereich. Das Fahrzeug 1, welches im Sinne der Erfindung das Ego-Fahrzeug 1 darstellt, bewegt sich dabei in Richtung R1 auf der Fahrspur F1. Der Überwachungsbereich ist hierbei in drei Vorwarnbereiche V1, V2, V3 und einen Triggerbereich T unterteilt, wobei auch weniger oder mehr als drei Vorwarnbereiche denkbar wären. Diese werden im gezeigten Fall links von dem Ego-Fahrzeug 1 auf der benachbarten Fahrspur F2 verortet. Weiterhin ist eine dritte Fahrspur F3 gezeigt. Der Überwachungsbereich ist hier exemplarisch auf der linken Seite gezeigt. Das System ist allerdings derart ausgestaltet, dass auf beiden Seiten ein Überwachungsbereich vorhanden ist. Auf diese Weise ist sichergestellt, dass das Fahrzeugumfeld in jeder Situation zuverlässig erfasst und überwacht werden kann. Die Bereiche sind in dieser Darstellung rechteckig ausgestaltet. Es wären aber auch andere geometrische Formen, wie beispielsweise Halbkreise möglich.

Figur 2 zeigt ein schematisches Ablaufdiagramm eines Algorithmus zur Datenauswertung. Hierbei wird mittels des Algorithmus geprüft, ob gewisse Bedingungen erfüllt sind und ob eine Steuerung S bzw. ein Regeleingriff durchgeführt werden muss. Um eine Steuerung S des Ego-Fahrzeugs 1 auszulösen muss ein Zielfahrzeug 2 eine der Vorwarnbereichsbedingungen VB1-VB3 für eine bestimmte minimale Zeit t₁ - ts erfüllten. Das heißt ein Zielfahrzeug 2 muss sich für eine bestimmte Zeit t₁ - ts in einem der beispielsweise in Figur 1 gezeigten Vorwarnbereiche V1-V3 befunden haben. Weiterhin ist erforderlich, dass das Zielfahrzeug 2 eine Triggerbereichbedingung TB erfüllt. Hierbei muss sich das Zielfahrzeug 2 in dem Triggerbereich T befunden haben. Damit zumindest eine der Vorwarnbereichsbedingungen VB1-VB3 erfüllt ist, können zusätzlich zu der Position und der minimalen Zeit des Zielfahrzeugs 2 in dem Vorwarnbereich V1-V3 weitere Bedingungen gestellt werden. Diese umfassen die minimale und maximale longitudinale und laterale relative Geschwindigkeit des Zielfahrzeugs 2. Weiterhin kann jeder Vorwarnbereich V1-V3 unabhängige und spezifische Bedingungen stellen. Jegliche Bedingungen können situativ und adaptiv ausgelegt werden. Zum Erfüllen der Triggerbereichbedingung TB kann ebenfalls die minimale und maximale longitudinale und laterale relative Geschwindigkeit des Zielfahrzeugs 2 als Bedingung gestellt werden.

Zusätzlich müssen bestimmte weitere Bedingungen B erfüllt sein. Diese können eine bestimmte Geschwindigkeit des Ego-Fahrzeugs 1 und/oder des Zielfahrzeugs 2 oder aber eine bestimmte laterale Beschleunigung des Ego-Fahrzeugs 1 und/oder des Zielfahrzeugs 2 umfassen. Wenn alle diese Bedingungen gleichzeitig erfüllt sind wird mittels des Algorithmus eine Steuerung S des Fahrzeugs veranlasst.

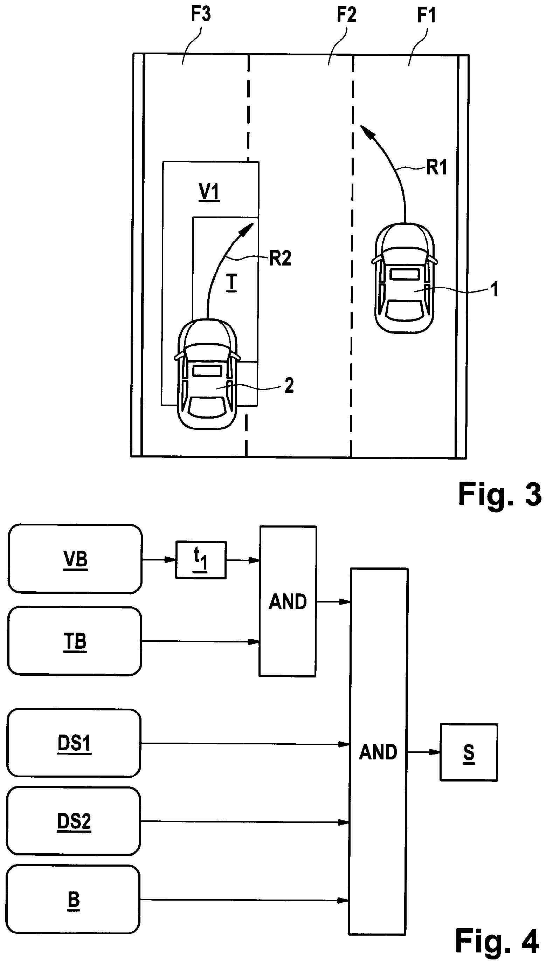

Figur 3 zeigt eine schematische Darstellung eines Fahrzeugs 1 und eines Zielfahrzeugs 2 mit Spurwechselabsicht. Das Ego-Fahrzeug 1 bewegt sich hierbei in Richtung R1, welche das Ego-Fahrzeug 1 in Richtung der Fahrspur F2 führt. Das Zielfahrzeug 2 bewegt sich in Richtung R2 und ebenfalls auf die Fahrspur F2. Durch die Spurwechselabsicht des Ego-Fahrzeugs 1 wird der Überwachungsbereich auf der dritten Fahrspur F3 verortet. Nun tritt das Zielfahrzeug 2 in den Vorwarnbereich V und den Triggerbereich T ein. daraufhin kann das Ego-Fahrzeug 1 durch einen entsprechenden Regeleingriff gesteuert werden, um eine Kollision zu vermeiden.

Figur 4 zeigt ein weiteres schematisches Ablaufdiagramm eines Algorithmus zur Datenauswertung. Neben der Vorwarnbereichsbedingung VB und der Triggerbereichbedingung TB müssen in diesem Fall noch die Bedingung der Detektion eines Spurwechseln DS1 des Ego-Fahrzeugs 1 und die Bedingung der Detektion eines Spurwechseln DS2 des Zielfahrzeugs 2 erfüllt sein. Ebenso müssen wie bereits zu Figur 2 erläutert bestimmte weitere Bedingungen B erfüllt sein um eine Steuerung bzw. einen Regeleingriff S auszulösen.

### Bezugszeichenliste

- 1: Ego-Fahrzeug
- 2: Zielfahrzeug
- B: Sonstige Bedingungen
- DS1: Detektion Spurwechselabsicht Ego-Fahrzeug
- DS2: Detektion Spurwechselabsicht Zielfahrzeug
- F1-F3: Fahrspuren
- R1: Bewegungsrichtung Ego-Fahrzeug
- R2: Bewegungsrichtung Zielfahrzeug
- S: Steuerung/Regeleingriff
- T: Triggerbereich
- TB: Triggerbereichbedingung
- t₁-t₃: minimale Zeit in einem Vorwarnbereich
- V1-V3: Vorwarnbereiche
- VB1-VB3: Vorwarnbereichsbedingungen

## Patentansprüche

1. Verfahren zum Vermeiden einer lateralen Kollision eines Ego-Fahrzeugs (1) mit den Schritten:
- Überwachen eines lateralen Bereichs des Ego-Fahrzeugs (1), wobei der überwachte Bereich in zumindest zwei Teilbereiche unterteilt ist und die Teilbereiche mindestens ein Vorwarnbereich (V1-V3) und ein Triggerbereich (T) sind,
- Erkennen eines Zielfahrzeugs (2) im Vorwarn- (V1-V3) und Triggerbereich (T),
- Ermitteln von Bewegungsparametern des Ego-Fahrzeugs (1) und des Zielfahrzeugs (2),
- Steuern des Ego-Fahrzeugs (1), wenn sich das Zielfahrzeug im Triggerbereich befindet, derart, dass der Abstand zum Zielfahrzeug (2) erhöht wird,
wobei der Vorwarnbereich im Gegensatz zum Triggerbereich ein weiter gefasster geometrischer Bereich ist, in dem sich das Zielfahrzeug vor Eintritt in den Triggerbereich befunden haben muss, und das Ego-Fahrzeug (1) in Abhängigkeit einer Verweildauer (t₁-t₃) des Zielfahrzeugs (2) im Vorwarnbereich (V1-V3) sowie im Triggerbereich (T) gesteuert wird, wobei die überwachten Teilbereiche auf der zu der von dem Ego-Fahrzeug (1) befahrenen Fahrspur (F1) benachbarten Fahrspur (F2) und/oder einer an die benachbarte Fahrspur (F2) angrenzenden Fahrspur (F3) verortet werden.

2. Verfahren nach Anspruch 1, wobei die Teilbereiche im Hinblick auf ihre räumliche Lokalisierung jeweils konstant sind und/oder die Teilbereiche im Hinblick auf ihre räumliche Lokalisierung jeweils adaptiv angepasst werden.

3. Verfahren nach Anspruch 2, wobei eine adaptive Anpassung der Teilbereiche aufgrund der Egofahrzeuggeschwindigkeit, einer lateralen Ego-Fahrzeuggeschwindigkeit, einer Fahrspurbreite, einer Fahrspurbreite einer benachbarten Fahrspur (F2), eines Abstands des Ego-Fahrzeugs zu der Fahrspurmarkierung oder einer Spurwechselabsicht des Ego-Fahrzeugs (1) vorgenommen wird.

4. Verfahren nach Anspruch 1, wobei die Teilbereiche auf der an die benachbarte Fahrspur (F2) angrenzenden Fahrspur (F3) verortet werden, wenn die benachbarte Fahrspur (F2) frei ist und eine Spurwechselabsicht des Ego-Fahrzeugs (1) festgestellt wird.

5. Verfahren nach Anspruch 4, wobei bei Erkennen eines Zielfahrzeugs (2) in dem Vorwarn- (V) und/oder dem Triggerbereich (T) auf der an die benachbarte Fahrspur (F2) angrenzenden Fahrspur (F3) eine Spurwechselabsicht des Zielfahrzeugs (2) detektiert wird.

6. Verfahren nach Anspruch 1, wobei die Bewegungsparameter eine Fahrzeuggeschwindigkeit und/oder eine Fahrzeugbeschleunigung umfassen.

7. Verfahren nach Anspruch 1, wobei die Steuerung (S) des Ego-Fahrzeugs (1) eine Beschleunigung, einen Bremsvorgang und/oder einen Lenkeingriff umfasst.

8. System zum Durchführen eines Verfahrens nach den Ansprüchen 1 bis 7, wobei das System eine Erfassungseinrichtung zum Erfassen und Bereitstellen von Daten des Überwachungsbereichs, eine Steuereinrichtung zum Steuern des Ego-Fahrzeugs (1) sowie eine Datenverarbeitungseinrichtung zum Auswerten der Daten aufweist.

9. System nach Anspruch 8, wobei die Erfassungseinrichtung zumindest eine Kamera und/oder zumindest einen Radarsensor umfasst.

10. System nach Anspruch 8, wobei die Datenverarbeitungseinrichtung einen Algorithmus beinhaltet, mittels welchem die Daten der Erfassungseinrichtung auswertbar sind.

## Claims

1. Method for avoiding a lateral collision of an ego vehicle (1), having the steps of:
- monitoring a lateral region of the ego vehicle (1), wherein the monitored region is subdivided into at least two subregions and the subregions are at least a prewarning region (V1-V3) and a trigger region (T),
- detecting a target vehicle (2) in the prewarning region (V1-V3) and in the trigger region (T),
- determining movement parameters of the ego vehicle (1) and of the target vehicle (2),
- controlling the ego vehicle (1), if the target vehicle is in the trigger region, in such a manner that the distance from the target vehicle (2) is increased, wherein, in contrast to the trigger region, the prewarning region is a larger geometric region in which the target vehicle must have been situated before entering the trigger region, and the ego vehicle (1) is controlled on the basis of a dwell time (t₁-t₃) of the target vehicle (2) in the prewarning region (V1-V3) and in the trigger region (T), wherein the monitored subregions are located in the lane (F2) adjacent to the lane (F1) used by the ego vehicle (1) and/or a lane (F3) adjoining the adjacent lane (F2).

2. Method according to Claim 1, wherein the subregions are each constant with regard to their spatial localization and/or the subregions are each adaptively adjusted with regard to their spatial localization.

3. Method according to Claim 2, wherein the subregions are adaptively adjusted on the basis of the ego vehicle speed, an lateral ego vehicle speed, a lane width, a lane width of an adjacent lane (F2), a distance between the ego vehicle and the lane marking or a lane change intention of the ego vehicle (1).

4. Method according to Claim 1, wherein the subregions are located in the lane (F3) adjoining the adjacent lane (F2) if the adjacent lane (F2) is free and a lane change intention of the ego vehicle (1) is determined.

5. Method according to Claim 4, wherein, if a target vehicle (2) is detected in the prewarning region (V) and/or the trigger region (T) in the lane (F3) adjoining the adjacent lane (F2), a lane change intention of the target vehicle (2) is detected.

6. Method according to Claim 1, wherein the movement parameters comprise a vehicle speed and/or a vehicle acceleration.

7. Method according to Claim 1, wherein the control (S) of the ego vehicle (1) comprises an acceleration, a braking operation and/or a steering intervention.

8. System for carrying out a method according to Claims 1 to 7, wherein the system has a capture device for capturing and providing data relating to the monitoring region, a control device for controlling the ego vehicle (1) and a data processing device for evaluating the data.

9. System according to Claim 8, wherein the capture device comprises at least one camera and/or at least one radar sensor.

10. System according to Claim 8, wherein the data processing device comprises an algorithm which can be used to evaluate the data from the capture device.

## Revendications

1. Procédé permettant d'éviter une collision latérale d'un véhicule ego (1), comprenant les étapes consistant à :
- surveiller une zone latérale du véhicule ego (1), dans lequel la zone surveillée est divisée en au moins deux zones partielles et les zones partielles sont au moins une zone d'avertissement préalable (V1 à V3) et une zone de déclenchement (T),
- identifier un véhicule cible (2) dans la zone d'avertissement préalable (V1 à V3) et dans la zone de déclenchement (T),
- déterminer des paramètres de déplacement du véhicule ego (1) et du véhicule cible (2),
- commander le véhicule ego (1) si le véhicule cible se trouve dans la zone de déclenchement de façon à augmenter la distance par rapport au véhicule cible (2),
dans lequel, contrairement à la zone de déclenchement, la zone d'avertissement préalable est une zone géométrique plus grande dans laquelle le véhicule cible a dû se trouver avant son entrée dans la zone de déclenchement, et le véhicule ego (1) est commandé en fonction d'une durée de séjour (t₁ à ts) du véhicule cible (2) dans la zone d'avertissement préalable (V1 à V3) ainsi que dans la zone de déclenchement (T), dans lequel les zones partielles surveillées sont localisées sur la voie de circulation (F2) voisine de la voie de circulation (F1) empruntée par le véhicule ego (1) et/ou sur une voie de circulation (F3) adjacente à la voie de circulation voisine (F2).

2. Procédé selon la revendication 1, dans lequel les zones partielles sont respectivement constantes concernant leur localisation spatiale et/ou les zones partielles sont respectivement ajustées de manière adaptative concernant leur localisation spatiale.

3. Procédé selon la revendication 2, dans lequel un ajustement adaptatif des zones partielles est effectué en raison de la vitesse du véhicule ego, d'une vitesse latérale du véhicule ego, d'une largeur de voie de circulation, d'une largeur de voie de circulation d'une voie de circulation voisine (F2) et d'une distance entre le véhicule ego et le marquage de voie de circulation ou d'une intention de changement de voie du véhicule ego (1).

4. Procédé selon la revendication 1, dans lequel les zones partielles sont localisées sur la voie de circulation (F3) adjacente à la voie de circulation voisine (F2) lorsque la voie de circulation voisine (F2) est libre et une intention de changement de voie du véhicule ego (1) est constatée.

5. Procédé selon la revendication 4, dans lequel lors de l'identification d'un véhicule cible (2) dans la zone d'avertissement préalable (V) et/ou de déclenchement (T), une intention de changement de voie du véhicule cible (2) est détectée sur la voie de circulation (F3) adjacente à la voie de circulation voisine (F2).

6. Procédé selon la revendication 1, dans lequel les paramètres de déplacement comprennent une vitesse de véhicule et/ou une accélération de véhicule.

7. Procédé selon la revendication 1, dans lequel la commande (S) du véhicule ego (1) comprend une accélération, un processus de freinage et/ou une intervention de direction.

8. Système permettant d'effectuer un procédé selon l'une quelconque des revendications 1 à 7, dans lequel le système présente un équipement de détection pour détecter et fournir des données de la zone de surveillance, un équipement de commande pour commander le véhicule ego (1) ainsi qu'un équipement de traitement de données pour évaluer les données.

9. Système selon la revendication 8, dans lequel l'équipement de détection comprend au moins une caméra et/ou au moins un capteur radar.

10. Système selon la revendication 8, dans lequel l'équipement de traitement de données comporte un algorithme permettant d'évaluer les données de l'équipement de détection.
